# EUROPÄISCHE PATENTSCHRIFT

(11) **EP 0 978 777 B1**
(45) Veröffentlichungstag und Bekanntmachung des Hinweises auf die Patenterteilung: **25.06.2003**
(21) Anmeldenummer: 99114379.3
(22) Anmeldetag: 22.07.1999
(51) Int. Cl.: G05D 1/08, B64C 13/16

(54) **Flugsteuerungseinrichtung zur Verbesserung der Längsstabilität eines geregelten Flugzeugs**
Avionic control system for the longitudinal stability augmentation of an aircraft
Système de contrôle de vol pour l'augmentation de la stabilité longitudinal d'un avion

(30) Priorität: 04.08.1998 DE 19835191
(43) Veröffentlichungstag der Anmeldung: 09.02.2000
(73) Patentinhaber: EADS Deutschland GmbH, 81663 München (DE)
(72) Erfinder: Becker, Jürgen, Dr., 81479 München (DE)

(56) Entgegenhaltungen:
- EP-A- 0 293 018
- US-A- 3 734 432
- US-A- 4 562 546
- US-A- 4 706 902
- US-A- 4 796 192
- US-A- 5 135 186

## Beschreibung

Die Erfindung betrifft eine Flugsteuerungseinrichtung zur Verbesserung der Längsstabilität eines geregelten Flugzeugs, insbesondere eines künstlich mit Hilfe eines Regelungssystems stabilisierten Kampfflugzeugs in Deltaflügel-Konfiguration.

Zur Längssteuerung geregelter Flugzeuge werden die dafür vorgesehenen Steuerklappen oder Stellflächen zum einen zum Steuern des Flugzeugs und zum anderen zum Stabilisieren des Flugzeugs in Flugbereichen verwendet, in denen das Flugzeug an oder über die Stabilitätsgrenze hinausgeht. Bislang wurden die Rückführungssignale des Flugzeugs-Regelungssystems auf die Stellantriebe aller für die Längssteuerung zuständigen Steuer- und insbesondere Hinterkantenklappen mit im wesentlichen gleicher Verstärkung geschaltet.

An Steuerungskonzepte zukünftiger Flugzeuge werden beispielsweise aufgrund veränderter Beladungszustände zum Beipiel durch Außenlasten oder aufgrund veränderter Anforderung an die Manövrierfähigkeit des Flugzeugs die Anforderungen gestellt, Flugzeuge mit größerer hinterer Schwerpunktlage und damit mit geringerer Stabilität zu regeln. Bei Flugzeugen, die von vornherein oder erst aufgrund solcher Schwerpunktverschiebungen instabil sind bzw. werden, entsteht dann die Anforderung, die auftretende Instabilität mit Hilfe der Stellflächen zu stabilisieren. Daraus resultieren größere Stellgeschwindigkeiten und größere Auslenkungen der Stellflächen, wodurch jedoch die Flugzeug-Struktur stärker angeregt wird und damit verbunden höhere Strukturkopplungen auftreten. Als Folge davon werden die zu vermeidenden aeroservoelastischen Instabilitäten größer.

Da außerdem eine Tendenz zu weicheren Flügelstrukturen vorliegt, sind im Flugregler Strukturfilter vorzusehen, um zu vermeiden, daß die Flügelstruktur unzulässig angeregt wird. Solche Strukturfilter beeinträchtigen jedoch die Leistungsfähigkeit des Flugreglers, so daß diese dazu führen können, daß die Anforderungen an die Regelung des Flugzeugs nur beschränkt erfüllt werden.

Der Erfindung liegt daher die Aufgabe zugrunde, eine Flugsteuerungseinrichtung zur Verbesserung der Längsstabilität eines geregelten Flugzeugs zu schaffen, das verbesserte Möglichkeiten zur Erfüllung der Anforderungen an die Steuerung und Stabilisierung des Flugzeugs bereitstellt.

Diese Aufgabe wird mit den Merkmalen des Anspruchs 1 gelöst. Alternative Ausführungsformen sind in den Unteransprüchen angegeben.

Das erfindungsgemäße Steuerungssystem hat den Vorteil, daß lediglich mit einer Erhöhung der Aufschaltung der Verstärkung im Vorwärtszweig des Flugregelsystems und damit der Stellsignale an die Stellantriebe der nahe am Flugzeugrumpf gelegenen Stellflächen ein höheres Maß an Manövrierfähigkeit erreicht und an Flugzeuginstabilität stabilisiert werden kann. Dadurch wird der im Flugregelsystem auftretende Phasenverzug aufgrund von im Flugregelsystem vorzusehenden Strukturfiltem im Bereich des Steueranteils der Flügelklappen-Bewegungen zumindest begrenzt oder sogar reduziert, so daß dadurch auch die ungünstigen Auswirkungen von Strukturfiltern auf das niederfrequente Übertragungsverhalten des Flugzeugs, insbesondere die Steueranteile, erheblich veringert werden.

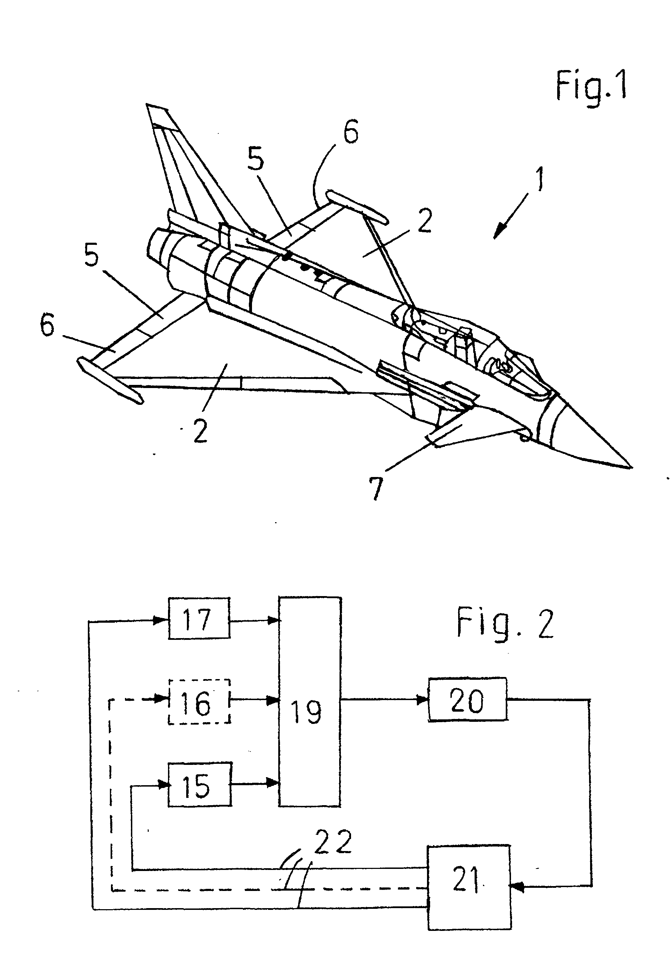

Im folgenden wird die Erfindung anhand der beiliegenden Fig. 1 und 2 beschrieben, die zeigen:
- Fig. 1: eine schematische Darstellung der Stellflächenkonfiguration eines modernen Kampfflugzeugs und
- Fig. 2: ein Blockschaltbild des gesamten Flugregelsystems einschließlich der Rückführsignale eines geregelten Flugzeugs.

Das in Fig. 1 gezeigte Flugzeug 1 weist Deltaflügel 2 auf. An jedem Deltaflügel 2 sind jeweils zwei Stellklappen oder Stellflächen vorgesehen, und zwar jeweils eine innere oder dem Rumpf naheliegende Stellfläche 5 und eine äußere oder dem Rumpf des Flugzeugs femliegendere Stellfläche 6. Das Flugzeug weist weiterhin auch Vorflügel 7 auf, die zur Trimmung und auch zur Steuerung verstellt werden können.

In Fig. 2 ist der Übertragungsblock für das Übertragungsverhalten der inneren Stellflächen mit 15, der Übertragungsblock für das Übertragungsverhalten der äußeren Stellflächen mit 16 und der Übertragungsblock für das Übertragungsverhalten der Vorflügel mit 17 bezeichnet, wobei das Übertragungsverhalten der Stellantriebe und der Hydrauliksysteme jeweils berücksichtigt ist. Da erfindungsgemäß die äußeren Stellflächen gar nicht oder nur in beschränktem Maße zur Steuerung und gegebenenfalls zur Stabilisierung des Flugzeugs herangezogen werden, ist der Übertragungsblock 16 mit unterbrochenen Linien dargestellt. In der Modelldarstellung nach der Fig. 2 wirken die Übertragungsblöcke für die inneren Stellflächen 15, die für die Vorflügel 17 und höchstens zum wesentlich geringeren Teil der Übertragungsblock für die äußeren Stellflächen 16 auf den Übertragungsblock 19 für das Flugzeug und dessen für die Flugregelung relevante Sensorik, insbesondere der Trägheits-Plattform. Die Größen 20, die von einer entsprechenden Sensorik für die Flugregelung ermittelt werden, insbesondere die Drehgeschwindigkeit, der Anstellwinkel und die Vertikalbeschleunigung des Flugzeugs, werden in die Regelungsmodule der Flugrechner geführt, deren Übertragungsblock das Bezugszeichen 21 hat. Die von diesen erzeugten Stellsignale 22 für die Stellantriebe der Stellflächen gehen in der Modelldarstellung der Fig. 2 auf das Übertragungsglied 15 für die inneren Stellflächen, das Übertragungsglied 16 für die äußeren Stellflächen und das Übertragungsglied 17 für die Vorflügel.

Wie in der Darstellung der Fig. 2 mit einer gestrichelten Linie angezeigt ist, entfällt die übliche hochfrequente Rückführung auf die äußeren Stellflächen 16 oder diese wird zumindest erheblich reduziert. Dafür erfolgt eine Erhöhung der Aufschaltung der Stellsignale auf die inneren Stellflächen 15 und optional zusätzlich auf die Vorflügel 7, 17. Ein geeigneter Tiefpass-Filter, der nur die nieder-frequenten Stellsignale für die auf die äußeren Klappen zuläßt, bewirkt einen stabilisierenden Einfluß durch die äußeren Klappen. Die Aufschaltung im wesentlichen auf die inneren Stellflächen 5, 15 erfolgt mit einer Verstärkungserhöhung, die im Flugrechner 21 implementiert wird und zu schnelleren und größeren Stellbewegungen der vom Flugrechner 21 angesprochenen inneren Stellflächen 5 führt, da die nach dem Stand der Technik auftretenden Steuerwirkungen der äußeren Stellflächen 6 im wesentlichen von den inneren Stellflächen 5 übernommen werden müssen.

Alternativ kann auch eine Stellgeschwindigkeits-Limitierung vorgesehen sein, die für die äußeren Stellflächen oder Steuerklappen schon ab einer geringeren Stellgeschwindigkeit wirksam wird als für die inneren Stellflächen oder die Vorflügel, soweit diese bei dem betreffenden Flugzeug zur Anwendung kommen. Vorzugsweise beträgt die Grenz-Geschwindigkeit für die Limitierung der äußeren Steuerklappen ein Viertel der Grenz-Geschwindigkeit, die für die anderen Steuerklappen wirksam ist.

Im Flugrechner 21 sind Notch-Filter oder Strukturfilter zur Ausfilterung von Anteilen elastischer Schwingungen in den Rückführungssignalen vorgesehen. Die Anordnung dieser Strukturfilter bedeutet jedoch einen teilweise erheblichen Phasenverzug im gesamten Regelsystem des Flugzeugs. Diese Strukturfilter müssen für Eigenfrequenzen der Flugzeugstruktur wirksam sein. Insbesondere die Behängung der Tragflächen des Flugzeugs mit Außenlasten führt zu niedrigen Eigenfrequenzen typischerweise im Bereich zwischen 5 und 14 Hz. Sind jedoch für diese Frequenzbereiche Strukturfilter in der Flugregelung vorzusehen, entsteht bei Kampfflugzeugen im flugmechanischen Frequenzbe reich von ca. 1 Hz durch die Strukturfilter ein Phasenverzug für die Stellgrößen, wodurch sich die Eigenschaften des Regelsystems hinsichtlich der Stabilisierung und Steuerung des Flugzeugs verschlechtern. Durch die Erhöhung der Verstärkung im Vorwärtszweig der Regelung in Bezug auf die inneren Stellflächen 5 im Verhältnis zur Verstärkung in Bezug auf die äußeren Stellflächen 6 ist die Implementierung von Strukturfiltern im niedrigen Frequenzbereich nur in wesentlich geringerem Maße erforderlich, da die Filterung der durch die äußeren Stellflächen oder Klappen bewirkten Strukturkopplung in einem hohen Maß eine Phasenverschiebung bis 1 Hz bewirkt. Dadurch tritt in diesem Frequenzband im Vergleich zum Stand der Technik ein geringerer Phasenverzug auf. Damit ergeben sich Möglichkeiten, Konfigurationen mit höherer Instabilität oder größerer hinterer Schwerpunktslage zu stabilisieren oder die Stabilität heutiger Flugzeuge zu verbessern.

Vorzugsweise ist das Maß der Verstärkung für die inneren Stellflächen 5 doppelt so groß wie die Verstärkung für die äußeren Stellflächen 6, mindestens jedoch um die Hälfte größer, d.h. die Bewegungen der inneren Stellflächen 5 zur Stabilisierung und Steuerung des Flugzeugs weisen eine mindestens um die Hälfte größere Stellgeschwindigkeit auf als die äußeren Stellflächen 6 in derselben Funktion.

Diese Steuerungseinrichtung muß nicht nur für Deltaflügler von Vorteil sein, sondern kann auch bei allen anderen militärischen und zivilen Flugzeugkonfigurationen vorgesehen sein, deren Stellflächen die Längssteuerung des Flugzeugs wesentlich bewirken. So können bei zivilen Großraum-Verkehrsflugzeugen die Stellflächen des Tragflügels derart vorgesehen und angesteuert werden, daß im wesentlichen die innen liegenden Stellflächen die Längssteuerung übernehmen.

## Patentansprüche

1. Flugsteuerungseinrichtung zur Längssteuerung eines geregelten Flugzeugs mit von der Längsachse des Flugzeugs aus gesehen äußeren und inneren für die Längssteuerung vorgesehenen Stellflächen, **dadurch gekennzeichnet, daß** zur Stabilisierung und Steuerung des Flugzeugs in dessen Längsachse die inneren Stellflächen (5) eine mindestens um die Hälfte größere Verstärkung erfahren als die äußeren Stellflächen (6).

2. Flugsteuerungseinrichtung zur Längssteuerung eines geregelten Flugzeugs mit von der Längsachse des Flugzeugs aus gesehen äußeren und inneren für die Längssteuerung vorgesehenen Stellflächen, **dadurch gekennzeichnet, daß** zur Stabilisierung und Steuerung des Flugzeugs in dessen Längsachse für die äußeren Stellflächen (6) eine mindestens um ein Viertel geringere Maximal-Geschwindigkeit vorgesehen ist als fiir die inneren Stellflächen (5).

3. Flugsteuerungseinrichtung nach dem Anspruch 1 oder 2, **dadurch gekennzeichnet, daß** am Flugzeug vorgesehene Vorflügel (7) vom Flugregelsystem zur Steuerung und Stabilisierung des Flugzeugs in der Längsachse zusätzlich angesteuert werden.

## Claims

1. Avionic control system for longitudinal control of an aircraft with, viewed from the longitudinal axis of the aircraft, outer and inner control surfaces provided for longitudinal control, **characterised in that** to stabilise and control the aircraft in its longitudinal axis, the inner control surfaces (5) undergo at least 50% more amplification than for the outer control surfaces (6).

2. Avionic control system for longitudinal control of an aircraft with, viewed from the longitudinal axis of the aircraft, outer and inner control surfaces provided for longitudinal control, **characterised in that** to stabilise and control the aircraft in its longitudinal axis, for the outer control surfaces (6) a maximum speed is provided which is at least one-quarter less than for the inner control surfaces (5).

3. Avionic control system according to claim 1 or 2, **characterised in that** front wings (7) provided on the aircraft are also controlled by the avionic control system to control and stabilise the aircraft in the longitudinal axis.

## Revendications

1. Installation de commande de vol pour la commande longitudinale d'un avion régulé, avec des volets d'actionnement prévus à l'extérieur et à l'intérieur par rapport à l'axe longitudinal de l'avion, pour sa commande longitudinale,
**caractérisée en ce que**
pour stabiliser et commander l'avion suivant son axe longitudinal, les volets d'actionnement intérieurs (5) sont commandés avec une amplification au moins double de moitié de celle des volets extérieurs (6).

2. Installation de commande de vol pour la commande longitudinale d'un avion régulé, comportant des volets d'actionnement extérieurs et intérieurs par rapport à l'axe longitudinal pour sa commande longitudinale,
**caractérisée en ce que**
pour stabiliser et commander l'avion suivant son axe longitudinal, pour les volets d'actionnement extérieurs (6) on a une vitesse maximale inférieure d'au moins un quart de celle des volets d'actionnement intérieurs (5).

3. Installation de commande de vol pour la commandé longitudinale d'un avion régulé, selon l'une des revendications 1 ou 2,
**caractérisée en ce que**
les ailerons de nez (7) équipant l'avion sont commandés en plus pour commander et stabiliser l'avion suivant son axe longitudinal.
